# EUROPEAN PATENT SPECIFICATION

(11) **EP 4 040 804 B1**
(45) Date of publication and mention of the grant of the patent: **07.05.2025**
(21) Application number: 21156020.6
(22) Date of filing: 09.02.2021
(51) Int. Cl.: H04R 25/00, H04M 1/60, H04M 1/72454, H04R 1/10, H04R 3/00, G10L 21/0208, G10L 21/0216

(54) **BINAURAL HEARING DEVICE WITH NOISE REDUCTION IN VOICE DURING A CALL**
BINAURALE HÖRVORRICHTUNG MIT RAUSCHUNTERDRÜCKUNG IN DER STIMME WÄHREND EINES ANRUFS
DISPOSITIF AUDITIF BINAURAL AVEC RÉDUCTION DU BRUIT DANS LA VOIX PENDANT UN APPEL

(43) Date of publication of application: 10.08.2022
(60) Divisional application: 24207688.3
(73) Proprietor: GN Hearing A/S, 2750 Ballerup (DK)
(72) Inventor: BERTHELSEN, Kim Spetzler, 2750 Ballerup (DK); FREDSGAARD, Johnny, 2750 Ballerup (DK); ODDERSHEDE, Niels, 2750 Ballerup (DK)
(74) Representative: GN Store Nord A/S

(56) References cited:
- EP-A1- 3 116 239
- EP-A1- 3 253 035
- WO-A1-2014/048492
- US-A1- 2007 009 127
- US-A1- 2018 174 597
- US-B1- 9 401 158

## Description

### FIELD

The present disclosure relates to a hearing device system configured to operate in a call mode.

### BACKGROUND

A hearing system user performing a phone call may be in various environments and sometimes it may be difficult for the user to change the environment. For instance, the user may be in a car, and naturally, noise coming from the outside will be stronger on the side where windows close to the user are. This noise can, together with the user's voice, be communicated to a far-end caller and the far-end caller may have difficulties distinguishing the user's voice from noise. Also, the user may not be able to hear the far-end caller properly, due to present noise. It is desired that the hearing device system can recognize such scenario and perform the call in accordance to the present sound environment.

WO 2014/048492 A1 proposes a method for operating a binaural hearing system with two hearing devices operationally interconnected by means of a bidirectional link which improves hearing perception in windy listening situations. The method comprises determining the level of wind noise present at each of the two hearing devices and sending the audio signal picked-up at the first hearing device to the second hearing device via the link and then providing an output signal derived from the received signal to the electrical-to- mechanical output converter of the second hearing device if the level of wind noise at the second hearing device exceeds the level of wind noise at the first hearing device by a pre-set threshold value. Furthermore, a binaural hearing system capable of performing such a method is given.

US 2018/174597 A1 discloses a headset including a wireless communication unit configured to provide wireless communication; a first microphone mounted on the headset; and a second microphone to be placed within an ear of the user wearing the headset; a controller configured to receive a phone call via the wireless communication unit from an external device, select either one of the first microphone or the second microphone to receive a voice signal of the user responding to the received phone call, in response to the selection of the first microphone, receive the voice signal of the user through the first microphone, correct a sound quality of the voice signal received through the first microphone, and transmit the corrected voice signal to the external device, and in response to the selection of the second microphone, receive the voice signal of the user from the external auditory canal of the ear of the user having the second microphone placed therein, correct a sound quality of the voice signal received through the second microphone and transmit the corrected voice signal to the external device.

US 2007/009127 A1 proposes to measure a noise level of at least two microphones and to compare the levels with one another. The microphones are then controlled according to the comparison result. Preferably the microphone having the lowest noise level is used as an omnidirectional microphone in a wind situation.

There is a need for a hearing device system which can improve the sound quality during a call.

### SUMMARY

It is an object of embodiments of the present invention to provide a hearing device system with improved sound quality during a call.

It is a further object of the embodiments of the present invention to provide a hearing device system which provides the best sound quality for the user of the system.

It is also an object of the embodiment of the present invention to provide a hearing device system which provides improved sound quality for a far-end caller.

In a first aspect, disclosed is a hearing device system comprising a first hearing device and a second hearing device according to claim 1.

In the present context, the hearing device system can be directed to a headset, a binaural hearing system, or binaural hearing aids.

The first hearing device is configured to be worn on one user's ear, e.g. right, and the second hearing device is configured to be worn another, e.g. left, user's ear.

The first hearing device and the second hearing device each comprise at least one microphone. The microphones are configured for reception of sounds from the environment including the user's voice. The number of microphones on the first and second device may be the same as well as their position in or on the hearing devices. Each hearing device also comprise a speaker configured to provide an audio signal to the user. The audio signal may be generated in response to sounds from the environment, it may represent signals received from an external device, such as music, a voice from an ongoing call, or similar. Alternatively, instead of a speaker one or both hearing devices may comprise a cochlear implant.

Further, each hearing device comprises a primary antenna for establishing communication between the first and second hearing device. The primary antenna may be a magnetic antenna. In that case, the bidirectional communication link established between the devices is a magnetic induction (MI) link. The first bidirectional link typically serves for exchanging various information and settings between the two hearing devices. The first bidirectional link may also serve for sending audio signal from one hearing device to another. For instance, the first hearing device may, as per system settings, be the only one receiving sounds from environment and/or from an external device. Then a first primary antenna may communicate a corresponding audio signal to a second primary antenna of the second device so that the user hears the signal in both hearing devices.

The first hearing device comprises a secondary antenna for establishing a second bidirectional link with an electronic device. The secondary antenna can be an electric antenna, a Bluetooth antenna, or a magnetic antenna. The hearing device comprising the secondary antenna typically also comprises a wireless communication unit configured for wireless communication and interconnected with the secondary antenna. The primary antenna may also be connected to the wireless communication unit. The secondary antenna may also receive and send signals to more than one external electronic device.

The electronic device can be a smart phone, computer, laptop, tablet, a smart watch, or other wearables, etc., and in general a device which can perform a call, via, e.g., a telephone network, IP network, or other. The electronic device may also be a bridge device, e.g. a Bluetooth bridge, that is a device serving as an intermediary device between the hearing device system and a further device performing the call. The secondary antenna may ensure pairing between the hearing device system and electronic device. The second bidirectional wireless link may serve for exchanging various information and settings between the hearing devices and the electronic device. The electronic device is adapted for establishing a call between the user of the hearing device system and a far-end caller. The electronic device may establish the connection with the hearing device upon call initialization and the connection may remain during the call. Alternatively, the electronic device may be in a constant connection with the hearing device regardless of the call. The call can be a voice call, e.g. only audio, or a video call, e.g. both audio and video.

The user of the hearing device system may initiate the call and he/she can also respond to a call either through the electronic device or via one of the hearing devices. When the electronic device receives the call, the call may be communicated to the hearing device system automatically as it is configured to operate in a call mode. Also, if the user of the hearing device system wants to make a call, he/she may select the hearing system to perform the call instead of the electronic device.

The hearing device system is configured to determine noise from the user's environment. The noise may be determined by a processing unit. The first and second hearing device may both comprise a processing unit. In some embodiments, at least one of the hearing devices may comprise the processing unit. The processing unit may be connected to the microphones thereby receiving signals detected by the microphones. The processing unit may then determine the first and second noise levels. In some embodiments, the hearing device system may be configured to measure and determine noise levels at least when the electronic device is performing the call between the user and a far-end caller. Additionally, the hearing device system may be configured to measure noise all the time while in use, and use measurements obtained before the call is initiated to start the call with optimal settings. Sound received by the microphones of the first and second hearing device can contain sounds from various sources in the user's environment, e.g. people talking, traffic noise, music in the room, etc. The hearing device system may measure a signal-to-noise ratio of the overall sound received by the microphones. Sound received by the microphone(s) of the first hearing device may be different from the sound received by the microphone(s) of the second hearing device simply because the user's head may be a shield for some sounds coming from one particular side of the user's head. The processing unit may be configured to compare the first and second noise level, N₁ and N₂, and based on the comparison operate the hearing system accordingly.

When, during the call, the first noise level is smaller than the second noise level, N₁<N₂, the at least one microphone of the first hearing device is selected to capture the user's voice for the call. In this case, the microphone(s) of the second hearing device may be disabled, or the sound captured by the microphone(s) may not be transmitted/used, and only the first hearing device microphone(s) would serve for sound reception.

When, during the call, the second noise level is smaller than the first noise level, N₂<N₁, the at least one microphone of the second hearing device is selected to capture the user's voice for the call. In this case, the microphone(s) of the first hearing device may be disabled or the sound captured by the microphone(s) may not be transmitted/used. Namely, the user's voice in the call will be captured by the microphone of the hearing device exposed to a lower noise level. The processing unit may be the one controlling activation of the microphone with the lowest noise level and its use during the call.

The electronic device is according to the invention connected to only one hearing device. If the electronic device is connected to the hearing device exposed to a higher noise, the call will continue on the other hearing device, i.e. the call will be transferred to the less noisy device. If the electronic device is connected to a less noisy hearing device, the call will continue on the same hearing device. In some non-claimed scenarios, the processing unit may, based on measured noise before the call is initiated, connect to a less noisy device upon the call initiation. Namely, the audio signal from the far-end caller may be received on the hearing device exposed to lower noise. Alternatively, the audio signal from the far-end caller may be received on both hearing devices. In some embodiments, the hearing device system may have a dynamic volume control. Namely, the processing unit may further be configured to turn up the volume of the speaker of the first or second hearing device having the lowest noise level of the first and second noise level.

When the electronic device is connected to only one hearing device, e.g. the first hearing device, this hearing device will analyse signals from the second hearing device streamed through the first bidirectional wireless link. The first hearing device will also perform noise level determination and comparison.

In some embodiments, the hearing device system can determine frequency of the noise at each of the hearing devices. If the frequency or a frequency band of the noise at the two hearing devices differ significantly from each other, the hearing device system may combine sound from the microphones of both hearing devices and use the combination to provide it to the far-end caller.

The hearing device system of the present invention ensures that the far-end caller always gets the best sound quality. The hearing device system of the present invention allows for management of sounds from the user's environment such that the far-end caller receives the user's voice with minimum external noise.

The first and/or the second hearing device may be a headset, a hearing aid, a hearable etc. The hearing device may be an in-the-ear (ITE) hearing device, a receiver-in-ear (RIE) hearing device, a receiver-in-canal (RIC) hearing device, a microphone-and-receiver-in-ear (MaRIE) hearing device, a behind-the-ear (BTE) hearing device, an overthe-counter (OTC) hearing device etc, a one-size-fits-all hearing device etc.

The hearing device is configured to be worn by a user. The hearing device may be arranged at the user's ear, on the user's ear, in the user's ear, in the user's ear canal, behind the user's ear etc. The user may wear two hearing devices, one hearing device at each ear. The two hearing devices may be connected, such as wirelessly connected. The hearing device may be configured for audio communication, e.g. enabling the user to listen to media, such as music or radio, and/or enabling the user to perform phone calls. The hearing device may be configured for performing hearing compensation for the user. The hearing device may be configured for performing noise cancellation etc.

The hearing device may be any hearing device, such as any hearing device compensating a hearing loss of a wearer of the hearing device, or such as any hearing device providing sound to a wearer, or such as a hearing device providing noise cancellation, or such as a hearing device providing tinnitus reduction/masking. The person skilled in the art is well aware of different kinds of hearing devices and of different options for arranging the hearing device in and/or at the ear of the hearing device wearer.

For example, the hearing device may be a Receiver-In-Canal (RIC) or Receiver-In-the-Ear (RIE or RITE) or a Microphone-and-Receiver-In-the-Ear (MaRIE) type hearing device, in which a receiver is positioned in the ear, such as in the ear canal, of a wearer during use, for example as part of an in-the-ear unit, while other hearing device components, such as a processor, a wireless communication unit, a battery, etc. are provided as an assembly and mounted in a housing of a Behind-The-Ear (BTE) unit. A plug and socket connector may connect the BTE unit and the earpiece, e.g. RIE unit or MaRIE unit.

The hearing device comprises a first input transducer, e.g. a microphone, to generate one or more microphone output signals based on a received audio signal. The audio signal may be an analogue signal. The microphone output signal may be a digital signal. Thus, the first input transducer, e.g. microphone, or an analogue-to-digital converter, may convert the analogue audio signal into a digital microphone output signal. All the signals may be sound signals or signals comprising information about sound. The hearing device may comprise a signal processor. The one or more microphone output signals may be provided to the signal processor for processing the one or more microphone output signals. The signals may be processed such as to compensate for a user's hearing loss or hearing impairment. The signal processor may provide a modified signal. All these components may be comprised in a housing of the BTE unit. The hearing device may comprise a receiver or output transducer or speaker or loudspeaker. The receiver may be connected to an output of the signal processor. The receiver may output the modified signal into the user's ear. The receiver, or a digital-to-analogue converter, may convert the modified signal, which is a digital signal, from the processor to an analogue signal. The receiver may be comprised in the earpiece, e.g. RIE unit or MaRIE unit. The hearing device may comprise more than one **microphone,** and the BTE unit may comprise at least one microphone and the RIE unit may also comprise at least one microphone.

The hearing device signal processor may comprise elements such as an amplifier, a compressor and/or a noise reduction system etc. The signal processor may be implemented in a signal-processing chip or a printed circuit board (PCB). The hearing device may further have a filter function, such as compensation filter for optimizing the output signal.

The hearing device may furthermore comprise a wireless communication unit or chip, such as a wireless communication circuit or a magnetic induction chip, for wireless data communication interconnected with an antenna, such as an radio frequency (RF) antenna or a magnetic induction antenna, for emission and reception of an electromagnetic field. The wireless communication unit including a radio or a transceiver, may connect to the hearing device signal processor and the antenna, for communicating with one or more external devices, such as one or more external electronic devices, including at least one smart phone, at least one tablet, at least one hearing accessory device, including at least one spouse microphone, remote control, audio testing device, etc., or, in some embodiments, with another hearing device, such as another hearing device located at another ear, typically in a binaural hearing device system.

In some embodiments, each of the first and the second hearing devices may comprise a noise detection unit. The noise detection units may be configured to perform determination of noise levels N₁ and N₂. In some embodiments, the processing unit may comprise the noise detection unit. In some embodiments, the processor unit may be connected to the noise detection unit. The noise detection unit may send determined noise levels to the processing unit. The noise detection unit of the hearing device which may not have the processing unit may communicate noise levels via the MI link to the hearing device with the processing unit. A separate noise detection unit ensures quick and accurate determination of the noise levels. Also, when each hearing device comprises its own noise detection unit, noise measurement are in accordance to how the user experiences the environment and how the sounds from the environment would be communicated to the far-end caller if there was no sound management during the call.

In some embodiments, at least one of the first and second hearing devices may comprise a speech detector. The speech detector may be configured to identify other people talking in a close proximity to the user. The speech detector may be connected to the processing unit and its input may contribute to determination of the noise levels N₁ and N₂.

In some embodiments, the noise detection unit may comprise an uncorrelated noise detector. Uncorrelated noise is individual for each microphone of the hearing devices as it is generated close to the microphone caused by wind or movement turbulence. The uncorrelated noise detector may determine turbulences around the user's ears originating from movements of the user, when the user runs or cycles or walks, or turbulences caused by wind. The uncorrelated noise detector may comprise a wind detector. The wind detector may determine turbulences around the user's ear caused by wind which normally comprises low frequencies. Wind noise being predominant in the frequency band of 22 Hz to 5 kHz. The wind noise detector may therefore comprise a low pass filter to allow detection of only low frequency wind noise while blocking other frequencies which are not of interest for the wind noise detector. For correlated noise, such as traffic noise, another detector may be arranged at each of the first and second hearing devices.

In some embodiments, the first and the second hearing devices may be configured to be placed in the left and right ear, respectively, of the user. The hearing devices may therefore be earbuds.

In some embodiments, the first and second hearing devices may be hearing aids configured to compensate for a hearing loss of the user. In this embodiment, the hearing device system is a binaural hearing aid. The processing unit may be configured to compensate for a hearing deficit of the user. The processing unit may then have multiple functions, and perform them simultaneously, such as performing the comparison of noise levels, controlling microphones for use in the call, and compensate for the hearing deficit. It is an advantage to have a binaural hearing aid configured for performing a call and at the same time ensure good sound quality of the call both at the user's end and at the far-end caller's end.

According to the invention, the at least one microphone of the hearing device establishing the second bidirectional wireless link may be configured to capture the user's voice upon a start of the call. Then the processing unit may, based on the determined noise levels, switch to the microphone(s) of the other hearing device if the sound quality is better on the other side of the user's ear. By having only one secondary antenna in the system, the hearing device system is simplified. In non-claimed examples where both hearing devices comprise the secondary antenna, the electronic device may connect randomly to the first or second device. Alternatively, the processing unit of the hearing devices may influence call initiation. In some embodiments, wherein the at least one microphone of the hearing device which first establishes the wireless communication with the electronic device may be configured to pick up the user's voice upon a start of the phone call.

If at any point the determined noise levels change and the switch to another device may need to be performed, the switch may be performed by switching to the bidirectional wireless link established between the other hearing device and the electronic device. If according to the invention the other hearing device does not comprise the secondary antenna for establishing the link with the electronic device, the switch can occur through the MI link established between the two hearing devices. In this scenario, the audio signal picked by the less noisy microphone(s) will be communicated through the MI link to the other device connected to the electronic device.

In some embodiments, the switch may be performed after a predetermined time. Namely, there may be some idle time when switching is not performed even though it is determined that the microphone(s) of the other device, which are not currently used, are less exposed to lower level of noise. By performing switching only after a predetermined time, it is possible to avoid possible frequent switching in scenarios when the environment changes frequently or when the user is in motion, running, cycling, etc. Alternatively, it is possible to perform a slow switching, i.e. fading the voice from the microphone of one hearing device to the microphone of the other hearing device.

In some embodiments, the first and second hearing devices may each comprise at least two microphones and a beamformer. When in the call mode and when N₁ is lower than N₂, N₁<N₂, the hearing device system may further be configured to beamform signals from the at least two microphones of the first hearing device. Also, when N₂ is lower than N₁, N₁>N₂, the hearing device system may be configured to beamform signals from the at least two microphones of the second hearing device. The beamforming may improve directionality of sound and serves to remove noise from signal to be sent to the far-end caller. A low pass filter may be arranged after the beamformer in order to further remove high frequency sounds from the environment, such as high frequency sirens.

In some embodiments, when in the call mode and when N₁<N₂, the hearing device system may further be configured to set a volume setting of the speaker of the second hearing device higher than a volume setting of the speaker of the first hearing device, and when N₁>N₂, set the volume setting of the speaker of the second hearing device lower than the volume setting of the speaker of the first hearing device. The processing unit may automatically set such settings upon determination and comparison of the noise levels. In this way, the user will have a higher sound volume at the hearing device on the side of the head which is exposed to a higher noise level compared to the other side. Thereby, it is not only the far-end caller experiencing the best sound quality but it is also the user of the system whose sound experience will be improved. The volume settings may be streamed through the first wireless bidirectional link between the hearing devices. **If** the processing unit is arranged only in the hearing device with the lower noise level, that processing unit may control volume in the other hearing device via the first bidirectional link.

In some embodiment, the first and second hearing device may both comprise a noise cancellation unit. The noise cancellation unit may ensure that, when the system is in the call mode, noise is cancelled on the hearing device exposed to a higher noise level. It is an advantage to have a system in which noise is cancelled in accordance to the detected noise levels N₁ and N₂. This also improves the user's experience during the call.

In some embodiments, each hearing device may comprise an active acoustic vent. When in the call mode and when N₁<N₂, the hearing device system may further be configured to open the acoustic vent of the first hearing device more than the acoustic vent of the second hearing device, and when N₁>N₂, open the acoustic vent of the second hearing device more than the acoustic vent of the first hearing device. Active vents normally comprise a passage between the inside of the ear, i.e. behind the hearing device, and the outside environment, and a valve for regulating the fluid connection through the passage. A closed setting allows less ambient noise and higher sound pressure. An open setting allows fluid connection, thus giving the user better ambient awareness.

In some embodiments, the hearing device may be configured to split the signals captured by the one or more microphones of the first and second hearing devices into several frequency bands, FB, i.e. FB_{1,1}, FB_{1,2}, FB_{1,3}, ... FB_{1,N}, for the first hearing device and FB_{2,1}, FB_{2,2}, FB_{2,3}, ... FB_{2,N} for the second hearing device. The hearing device system may perform noise detection for each frequency band. The hearing device system may be configured to create the signal for the call by combing the respective frequency bands that have the lower noise. Thus, the audio from the user's side may have better quality in situations where one of the hearing aids is affected by noise in some frequency bands, e.g. lower frequency bands, and the other hearing device is affected by noise in other frequency bands, e.g. higher frequency bands.

In some embodiments, the hearing device system may be configured to analyse the frequency of noise of the sound received by the at least one microphone of the first hearing device and of the sound received by the at least one microphone of the second hearing device. The hearing device system may be configured to combine the user's voice from the microphones of the first and second hearing devices if the noise on the at least one microphone of the first hearing device comprises a frequency band different than noise on the at least one microphone of the second hearing device. Namely, the sound spectrum originating from the user and the environment can be split into bands and each band can be analyzed for noise. The various frequency bands with less noise can then be combined and in particular bands which encompass the human voice. The human voice is usually in the frequency range between 300 and 3000 Hz.

In a second aspect, a method for operating a hearing device system according to claim 7 is disclosed.

The call is initiated by establishing a wireless connection between the electronic device and the first hearing device which comprises the secondary antenna and typically further comprises a wireless communication unit. The electronic device may be seen as a master device controlling which hearing device to connect to. Noise levels determination may be performed all times, regardless of whether the call is in progress or not. When the noise levels are measured and the call is initiated, the hearing device system, i.e. a processor unit of at least one hearing device, may compare the first and second noise levels determined by, e.g., a noise detection unit, and based on the comparison, make a decision on how to proceed with the call, i.e. which hearing device is to be used for continuing the call.

The present invention relates to different aspects including the system described above and in the following, and a corresponding method yielding one or more of the benefits and advantages as disclosed in the appended claims.

### BRIEF DESCRIPTION OF THE DRAWINGS

The above and other features and advantages will become readily apparent to those skilled in the art by the following detailed description of exemplary embodiments thereof with reference to the attached drawings, in which:
Fig. 1 schematically illustrates an example of a hearing device system comprising a first hearing device and a second hearing device;
Fig. 2 schematically illustrates another example of a hearing device system comprising a first hearing device and a second hearing device;
Fig. 3 schematically illustrates a flow chart of an example of a method in a hearing device system.

### DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown.

Throughout, the same reference numerals are used for identical or corresponding parts.

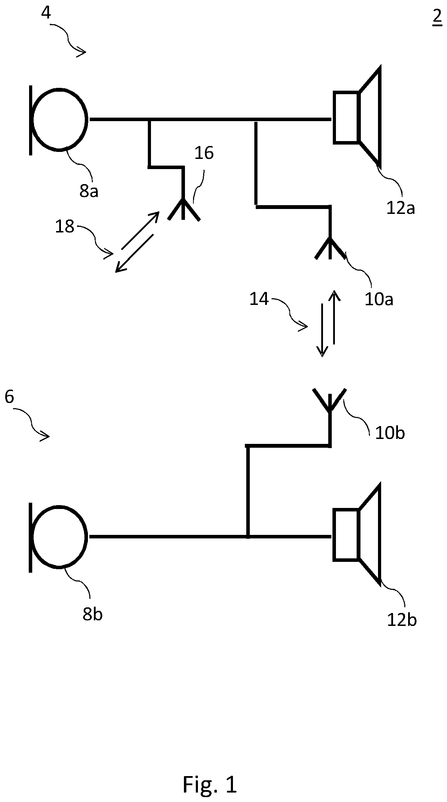

Fig. 1 schematically illustrates an example of a hearing device system 2. The system comprises a first hearing device 4 and a second hearing device 6. The first hearing device 4 and the second hearing device 6 are configured to be worn at a first ear and second ear, respectively, of a user. The first hearing device 4 comprises at least one microphone 8a, a primary antenna 10a, and a speaker 12a. Similarly, the second hearing device 6 comprises at least one microphone 8b, a primary antenna 10b, and a speaker 12b. The primary antennas 10a, 10b are configured for establishing a first bidirectional wireless link 14 between the first hearing device 4 and the second hearing device 6.

The first hearing device 4 further comprises a secondary antenna 16 configured for establishing a second bidirectional wireless link 18 with an electronic device (not shown). Alternatively, the second hearing device may comprise the secondary antenna 16. The electronic device is adapted for establishing a call between the user and a far-end caller.

The hearing device system 2 is configured to determine a first noise level, N₁, of sound received by the at least one microphone 8a of the first hearing device 4 and a second noise level, N₂, of sound received by the at least one microphone 8b of the second hearing device 6.

The hearing device system 2 is further configured to operate in a call mode. When the first noise level is lower than the second noise level, N₁<N₂, the at least one microphone 8a of the first hearing device 4 is selected to capture the user's voice for the call. When the second noise level is lower than the first noise level, N₁>N₂, the at least one microphone 8b of the second hearing device 6 is selected to capture the user's voice for the call.

By selecting a less noisy microphone, a less noisy side of the user is selected and the hearing device system 2 thereby ensures that the far-end caller always gets the best sound quality. The hearing device system 2 allows for management of sounds from the user's environment such that the far-end caller receives the user's voice with minimum external noise.

The hearing device may be configured to split the signals captured by the one or more microphones of the first and second hearing devices into several frequency bands, FB, i.e. FB_{1,1}, FB_{1,2}, FB_{1,3}, ... FB_{1,N}, for the first hearing device and FB_{2,1}, FB_{2,2}, FB_{2,3}, ... FB_{2,N} for the second hearing device. Thus, if N₁>N₂for FB_{1,1}, FB_{2,1} the hearing device system will use FB_{2,1}. Similarly, if N₁<N₂for FB_{1,2}, FB_{2,2}the hearing device system will use FB_{1,2} and so forth for the remaining frequency bands.

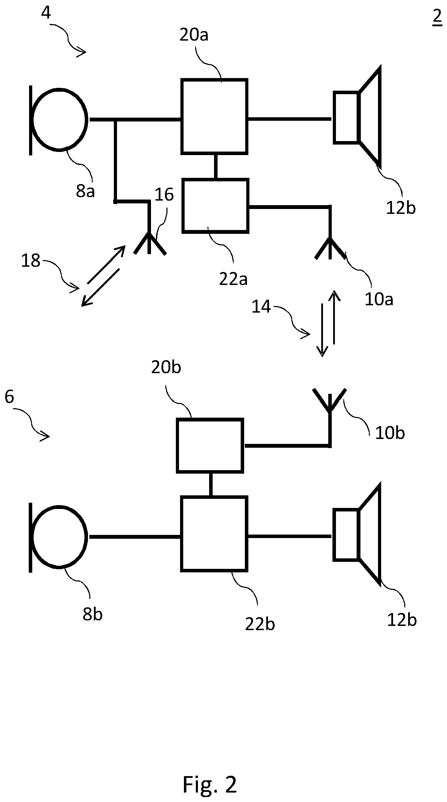

Fig. 2 schematically illustrates another example of a hearing device system 2 comprising all the elements as described in connection to Fig. 1. The system of Fig. 2 further comprises noise detection units 20a, 20b comprised in the first hearing device 4 and the second hearing device 6, respectively. The noise detection units 20a and 20b may be configured to determine noise from the user's environment as well as to perform determination of N₁ and N₂. The hearing devices 4 and 6 may each comprise at least one wireless communication unit 22a, 22b configured for wireless communication and interconnected with the primary antennas 10a, 10b. The secondary antenna 16 may also be interconnected with a wireless communication unit (not shown). The secondary antenna 16 may be configured to receive and send signals to more than one external electronic device.

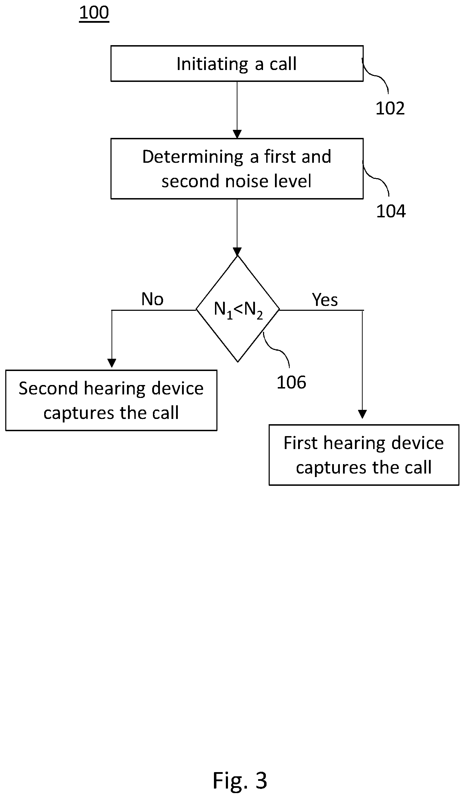

Fig. 3 schematically illustrates a flow chart of an example of a method 100 in a hearing device system. The hearing device system performing the method may be in accordance to the examples described in connection with Fig. 1 and Fig. 2. The first step of the method 100 is the step 102 of initiating the call between a user and a far-end caller. The method further comprises the step 104 of determining a first noise level, N₁, of sound received by the at least one microphone of the first hearing device and a second noise level, N₂, of sound received by the at least one microphone of the second hearing device. The determined noise levels are then compared in the step 106. When N₁<N₂, the at least one microphone of the first hearing device is selected to capture the user's voice for the call. When N₁>N₂, the at least one microphone of the second hearing device is selected to capture the user's voice for the call.

The call is initiated by establishing a wireless connection between the electronic device and at least one of the first and second hearing device which comprises the secondary antenna and typically further comprises a wireless communication unit. The electronic device may be seen as a master device controlling which hearing device to connect to.

Noise levels determination may be performed all times, regardless of whether the call is in progress or not. When the noise levels are measured and the call is initiated, the hearing device system, i.e. a processor unit of at least one hearing device, may compare the first and second noise levels determined by, e.g., a noise detection unit, and based on the comparison, make a decision on how to proceed with the call, i.e. which hearing device is to be used for continuing the call.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is defined by the set of appended claims.

### LIST OF REFERENCES

- 2: hearing device system
- 4: first hearing device
- 6: second hearing device
- 8a, 8b: microphone
- 10a, 10b: primary antenna
- 12a, 12b: speaker
- 14: first bidirectional wireless link
- 16: secondary antenna
- 18: second bidirectional link
- 20a, 20b: noise detection unit
- 22a, 22b: wireless communication unit
- 100: method in a hearing device system
- 102: initiating a call
- 104: determining noise levels
- 106: comparing noise levels

## Claims

1. A hearing device system (2) comprising a first hearing device (4) and a second hearing device (6) configured to be worn at a first ear and second ear, respectively, of a user,
- the first hearing device (4) and the second hearing device (6) each comprising at least one microphone (8a, 8b), a primary antenna (10a, 10b) configured for establishing a first bidirectional wireless link (14) with the other hearing device, and a speaker (12a, 12b),
- the hearing device system (2) being configured to determine a first noise level, N₁, of sound received by the at least one microphone (8a) of the first hearing device (4) and a second noise level, N₂, of sound received by the at least one microphone (8b) of the second hearing device (6),
**characterized in that**
- the first hearing device (4) comprising a secondary antenna (16) configured for establishing a second bidirectional wireless link (18) with an electronic device adapted for establishing a call between the user and a far-end caller, and the second hearing device (6) does not comprise a secondary antenna, and
- **the hearing** device system (2) being further configured to operate in a call mode in which:
the at least one microphone (8a) of the first hearing device (4) establishing the second bidirectional wireless link (18) is configured to capture the user's voice upon a start of the call; and
when N₁<N₂, the at least one microphone (8a) of the first hearing device (4) is selected to capture the user's voice for the call and the user's captured voice signal is transmitted to the electronic device through the second bidirectional wireless link (18), and
when N₁>N₂, the at least one microphone (8b) of the second hearing device (6) is selected to capture the user's voice for the call and the user's captured voice signal is transmitted to the electronic device through the first bidirectional wireless link (14) to the first hearing device and then through the second bidirectional wireless link (18).

2. A hearing device system (2) according to claim 1, wherein each of the first (4) and the second (6) hearing devices comprise a noise detection unit (20a, 20b), said noise detection units (20a, 20b) being configured to perform said determination of N₁ and N₂.

3. A hearing device system (2) according to claim 2, wherein the noise detection unit (20a, 20b) comprises an uncorrelated noise detector.

4. A hearing device system (2) according to any of the previous claims, wherein the first (4) and second (6) hearing devices are hearing aids configured to compensate for a hearing loss of the user.

5. A hearing device system (2) according to any of the previous claims, wherein the first and second hearing devices each comprises at least two microphones and a beamformer, wherein, when in call mode, the hearing device system is further configured to:
when N₁<N₂, beamform signals from the at least two microphones of the first hearing device, and
when N₁>N₂, beamform signals from the at least two microphones of the second hearing device.

6. A hearing device system (2) according to any of the claims 2-5, wherein the hearing device system (2) is configured to analyse the frequency of noise of sound received by the at least one microphone (8a) of the first hearing device (4) and of sound received by the at least one microphone (8b) of the second hearing device (6), and wherein the hearing device system (2) is configured to combine the user's voice from the microphones (8a, 8b) of the first (4) and second (6) hearing devices if the noise on the at least one microphone (8a) of the first hearing device (4) comprises a frequency band different than noise on the at least one microphone (8b) of the second hearing device (6).

7. A method (100) for operating a hearing device system (2), the hearing device system comprising: a first hearing device (4) and a second hearing device (6) configured to be worn at a first ear and second ear, respectively, of a user; the first hearing device (4) and the second hearing device (6) each comprising at least one microphone (8a, 8b), a primary antenna (10a, 10b) for establishing a first bidirectional wireless link (14) with the other hearing device, and a speaker (12a, 12b); and the first hearing device (4) comprising a secondary antenna (16) for establishing a second bidirectional wireless link (18) with an electronic device adapted for establishing a call between the user and a far-end caller, and the second hearing device (6) not comprising a secondary antenna;
the method comprising the steps of:
- initiating the call between a user and a far-end caller (102), establishing by the at least one microphone (8a) of the first hearing device (4) the second bidirectional wireless link (18) is configured to capture the user's voice upon a start of the call,
- determining a first noise level, N₁, of sound received by the at least one microphone of the first hearing device and a second noise level, N₂, of sound received by the at least one microphone of the second hearing device (104);
**characterized in that** the method (100) further comprises the step of:
- selecting (106),
when N₁<N₂, the at least one microphone of the first hearing device to capture the user's voice for the call and transmitting the user's captured voice signal to the electronic device through the second bidirectional wireless link, and
when N₁>N₂, the at least one microphone of the second hearing device to capture the user's voice for the call and transmitting the user's captured voice signal to the electronic device through the first bidirectional wireless link to the first hearing device and then through the second bidirectional wireless link.

## Patentansprüche

1. Ein Hörgerätesystem (2), das ein erstes Hörgerät (4) und ein zweites Hörgerät (6) umfasst, die dazu konfiguriert sind, an einem ersten bzw. zweiten Ohr eines Benutzers getragen zu werden,
- wobei das erste Hörgerät (4) und das zweite Hörgerät (6) jeweils mindestens ein Mikrofon (8a, 8b), eine Primärantenne (10a, 10b), die zum Herstellen einer ersten bidirektionalen drahtlosen Verbindung (14) mit dem anderen Hörgerät konfiguriert ist, und einen Lautsprecher (12a, 12b) umfassen,
- wobei das Hörgerätesystem (2) dazu konfiguriert ist, einen ersten Geräuschpegel N ₁ des von dem mindestens einen Mikrofon (8a) des ersten Hörgeräts (4) empfangenen Schalls und einen zweiten Geräuschpegel N ₂ des von dem mindestens einen Mikrofon (8b) des zweiten Hörgeräts (6) empfangenen Schalls zu bestimmen,
**dadurch gekennzeichnet, dass**
- das erste Hörgerät (4) eine Sekundärantenne (16) aufweist, die zum Aufbau einer zweiten bidirektionalen drahtlosen Verbindung (18) mit einem elektronischen Gerät konfiguriert ist, das zum Aufbau eines Anrufs zwischen dem Benutzer und einem Anrufer am anderen Ende angepasst ist, und das zweite Hörgerät (6) keine Sekundärantenne aufweist, und
- wobei das Hörgerätesystem (2) ferner für den Betrieb in einem Anrufmodus konfiguriert ist, in dem:
wenn N ₁ < N ₂ , wird das mindestens eine Mikrofon (8a) des ersten Hörgeräts (4) ausgewählt, um die Stimme des Benutzers für den Anruf aufzunehmen, und das aufgenommene Sprachsignal des Benutzers wird über die zweite bidirektionale drahtlose Verbindung (18) an das elektronische Gerät übertragen, und
wenn N ₁ >N ₂ , wird das mindestens eine Mikrofon (8b) des zweiten Hörgeräts (6) ausgewählt, um die Stimme des Benutzers für den Anruf aufzunehmen, und das aufgenommene Sprachsignal des Benutzers wird über die erste bidirektionale drahtlose Verbindung (14) an das elektronische Gerät des ersten Hörgeräts und dann über die zweite bidirektionale drahtlose Verbindung (18) übertragen.

2. **Ein Hörgerätesystem** (2) nach Anspruch 1, wobei das erste (4) und das zweite (6) Hörgerät jeweils eine Geräuscherkennungseinheit (20a, 20b) umfasst, wobei die Geräuscherkennungseinheiten (20a, 20b) dazu konfiguriert sind, die Bestimmung von N ₁ und N ₂ durchzuführen.

3. Ein Hörgerätesystem (2) nach Anspruch 2, wobei die Geräuscherkennungseinheit (20a, 20b) einen unkorrelierten Geräuschdetektor umfasst.

4. Ein Hörgerätesystem (2) nach einem der vorhergehenden Ansprüche, wobei das erste (4) und das zweite (6) Hörgerät Hörhilfen sind, die dazu konfiguriert sind, einen Hörverlust des Benutzers auszugleichen.

5. Ein Hörgerätesystem (2) nach einem der vorhergehenden Ansprüche, wobei das erste und das zweite Hörgerät jeweils mindestens zwei Mikrofone und einen Beamformer umfassen, wobei das Hörgerätesystem im Anrufmodus außerdem dazu konfiguriert ist:
wenn N ₁ < N ₂, Beamform-Signale von den mindestens zwei Mikrofonen des ersten Hörgeräts und
wenn N ₁ > N ₂ , Beamform-Signale von den mindestens zwei Mikrofonen des zweiten Hörgeräts.

6. Ein Hörgerätesystem (2) gemäß einem der Ansprüche 2-6, wobei das Hörgerätesystem (2) dazu konfiguriert ist, die Frequenz des Rauschens des von dem mindestens einen Mikrofon (8a) des ersten Hörgeräts (4) empfangenen Tons und des von dem mindestens einen Mikrofon (8b) des zweiten Hörgeräts (6) empfangenen Tons zu analysieren, und wobei das Hörgerätesystem (2) dazu konfiguriert ist, die Stimme des Benutzers von den Mikrofonen (8a, 8b) des ersten (4) und des zweiten (6) Hörgeräts zu kombinieren, wenn das Rauschen auf dem mindestens einen Mikrofon (8a) des ersten Hörgeräts (4) ein anderes Frequenzband umfasst als das Rauschen auf dem mindestens einen Mikrofon (8b) des zweiten Hörgeräts (6).

7. Ein Verfahren (100) in einem Hörgerätesystem (2), wobei das Hörgerätesystem umfasst: ein erstes Hörgerät (4) und ein zweites Hörgerät (6), die so konfiguriert sind, dass sie am ersten bzw. zweiten Ohr eines Benutzers getragen werden; wobei das erste Hörgerät (4) und das zweite Hörgerät (6) jeweils mindestens ein Mikrofon (8a, 8b), eine Primärantenne (10a, 10b) zum Herstellen einer ersten bidirektionalen drahtlosen Verbindung (14) mit dem anderen Hörgerät und einen Lautsprecher (12a, 12b) umfassen; und wobei das erste Hörgerät (4) eine Sekundärantenne (16) zum Herstellen einer zweiten bidirektionalen drahtlosen Verbindung (18) mit einem elektronischen Gerät umfasst, das zum Herstellen eines Anrufs zwischen dem Benutzer und einem Anrufer am anderen Ende geeignet ist, und wobei das zweite Hörgerät (6) keine Sekundärantenne umfasst;
wobei das Verfahren die folgenden Schritte umfasst:
- Einleiten des Anrufs zwischen einem Benutzer und einem Anrufer am anderen Ende (102),
- Bestimmen eines ersten Geräuschpegels N ₁ des von dem mindestens einen Mikrofon des ersten Hörgeräts empfangenen Schalls und eines zweiten Geräuschpegels N ₂ des von dem mindestens einen Mikrofon des zweiten Hörgeräts (104) empfangenen Schalls;
**dadurch gekennzeichnet, dass** das Verfahren (100) weiterhin den folgenden Schritt umfasst:
- Auswählen (106),
wenn N < N ₂ , das mindestens eine Mikrofon des ersten Hörgeräts die Stimme des Benutzers für den Anruf aufnimmt und das aufgenommene Sprachsignal des Benutzers über die zweite bidirektionale drahtlose Verbindung an das elektronische Gerät überträgt, und
wenn N , > N ₂ , nimmt das mindestens eine Mikrofon des zweiten Hörgeräts die Stimme des Benutzers für den Anruf auf und überträgt das aufgenommene Sprachsignal des Benutzers über die erste bidirektionale drahtlose Verbindung zum ersten Hörgerät und dann über die zweite bidirektionale drahtlose Verbindung an das elektronische Gerät.

## Revendications

1. **Système** de dispositif auditif (2) comprenant un premier dispositif auditif (4) et un second dispositif auditif (6) configurés pour être portés respectivement sur une première et une seconde oreille d'un utilisateur,
- le premier dispositif auditif (4) et le deuxième dispositif auditif (6) comprenant chacun au moins un microphone (8a, 8b), une antenne primaire (10a, 10b) configurée pour établir une première liaison sans fil bidirectionnelle (14) avec l'autre dispositif auditif, et un haut-parleur (12a, 12b),
- le système de dispositif auditif (2) étant configuré pour déterminer un premier niveau de bruit, N ₁ , du son reçu par le ou les microphones (8a) du premier dispositif auditif (4) et un second niveau de bruit, N ₂ , du son reçu par le ou les microphones (8b) du second dispositif auditif (6),
**caractérisé en ce que**
- le premier dispositif auditif (4) comprenant une antenne secondaire (16) configurée pour établir une seconde liaison sans fil bidirectionnelle (18) avec un dispositif électronique adapté pour établir un appel entre l'utilisateur et un appelant distant, et le second dispositif auditif (6) ne comprend pas d'antenne secondaire, et
- le système d'appareil auditif (2) étant en outre configuré pour fonctionner dans un mode d'appel dans lequel :
lorsque N ₁ < N ₂ , au moins un microphone (8a) du premier dispositif auditif (4) est sélectionné pour capturer la voix de l'utilisateur pour l'appel et le signal vocal capturé de l'utilisateur est transmis au dispositif électronique via la deuxième liaison sans fil bidirectionnelle (18), et
lorsque N ₁ > N ₂ , le ou les microphones (8b) du deuxième dispositif auditif (6) sont sélectionnés pour capturer la voix de l'utilisateur pour l'appel et le signal vocal capturé de l'utilisateur est transmis au dispositif électronique via la première liaison sans fil bidirectionnelle (14) vers le premier dispositif auditif puis via la deuxième liaison sans fil bidirectionnelle (18).

2. Système de dispositif auditif (2) selon la revendication 1, dans lequel chacun des premier (4) et deuxième (6) dispositifs auditifs comprend une unité de détection de bruit **(20a, 20b),** lesdites unités de détection de bruit (20a, 20b) étant configurées pour effectuer ladite détermination de N ₁ et N ₂ .

3. Système de dispositif auditif (2) selon la revendication 2, dans lequel l'unité de détection de bruit (20a, 20b) comprend un détecteur de bruit non corrélé.

4. Système de dispositif auditif (2) selon l'une quelconque des revendications précédentes, dans lequel les premier (4) et deuxième (6) dispositifs auditifs sont des prothèses auditives configurées pour compenser une perte auditive de l'utilisateur.

5. Système de dispositif auditif (2) selon l'une quelconque des revendications précédentes, dans lequel les premier et second dispositifs auditifs comprennent chacun au moins deux microphones et un formateur de faisceaux. En mode appel, le système de dispositif auditif est en outre configuré pour :
lorsque N ₁ < N ₂ , les signaux de forme de faisceau provenant des au moins deux microphones du premier appareil auditif, et
lorsque N ₁ > N ₂ , signaux de forme de faisceau provenant d'au moins deux microphones du deuxième appareil auditif.

6. Système de dispositif auditif (2) selon l'une quelconque des revendications 2 à 6, dans lequel le système de dispositif auditif (2) est configuré pour analyser la fréquence du bruit du son reçu par le ou les microphones (8a) du premier dispositif auditif (4) et du son reçu par le ou les microphones (8b) du second dispositif auditif (6), et dans lequel le système de dispositif auditif (2) est configuré pour combiner la voix de l'utilisateur provenant des microphones (8a, 8b) des premier (4) et second (6) dispositifs auditifs si le bruit sur le ou les microphones (8a) du premier dispositif auditif (4) comprend une bande de fréquence différente du bruit sur le ou les microphones (8b) du second dispositif auditif (6).

7. Procédé (100) dans un système d'appareil auditif (2), le système d'appareil auditif comprenant : un premier appareil auditif (4) et un second appareil auditif (6) configurés pour être portés respectivement sur une première et une seconde oreille d'un utilisateur ; **le premier** appareil auditif (4) et le second appareil auditif (6) comprenant chacun au moins un microphone (8a, 8b), une antenne primaire (10a, 10b) pour établir une première liaison sans fil bidirectionnelle (14) avec l'autre appareil auditif, et un haut-parleur (12a, 12b) ; et le premier appareil auditif (4) comprenant une antenne secondaire (16) pour établir une seconde liaison sans fil bidirectionnelle (18) avec un dispositif électronique adapté pour établir un appel entre l'utilisateur et un appelant distant, et le second appareil auditif (6) ne comprenant pas d'antenne secondaire ;
le procédé comprenant les étapes suivantes :
- initier l'appel entre un utilisateur et un appelant distant (102),
- déterminer un premier niveau de bruit, N ₁ , du son reçu par le ou les microphones du premier dispositif auditif et un deuxième niveau de bruit, N ₂ , du son reçu par le ou les microphones du deuxième dispositif auditif (104) ;
**caractérisé en ce que** le procédé (100) comprend en outre l'étape consistant à :
- sélection (106),
lorsque N ₁ < N ₂, au moins un microphone du premier appareil auditif capture la voix de l'utilisateur pour l'appel et transmet le signal vocal capturé de l'utilisateur à l'appareil électronique via la deuxième liaison sans fil bidirectionnelle, et
lorsque N ₁ > N ₂ , au moins un microphone du deuxième dispositif auditif permet de capturer la voix de l'utilisateur pour l'appel et de transmettre le signal vocal capturé de l'utilisateur au dispositif électronique via la première liaison sans fil bidirectionnelle vers le premier dispositif auditif puis via la deuxième liaison sans fil bidirectionnelle.
